# EUROPEAN PATENT SPECIFICATION

(11) **EP 2 522 933 B1**
(45) Date of publication and mention of the grant of the patent: **16.09.2020**
(21) Application number: 12166960.0
(22) Date of filing: 07.05.2012
(51) Int. Cl.: F25B 7/00, F25B 30/02, F24D 11/02, F24D 19/10

(54) **Heat storing apparatus having cascade cycle and control process of the same**
Wärmespeichervorrichtung mit Kaskadenkreis und zugehörigem Steuerverfahren
Appareil de stockage de chaleur à cycle en cascade et procédé de commande de celui-ci

(30) Priority: 09.05.2011 KR 20110043560
(43) Date of publication of application: 14.11.2012
(73) Proprietor: LG Electronics, Inc., Seoul 150-721 (KR)
(72) Inventor: Kang, Donghoon, 641-110 Changwon-si (KR); Jung, Seunghyun, 641-110 Changwon-si (KR); Kim, Jungpil, 641-110 Changwon-si (KR); Park, Heewoong, 641-110 Changwon-si (KR)
(74) Representative: Vossius & Partner Patentanwälte Rechtsanwälte mbB

(56) References cited:
- WO-A1-2011/036905
- JP-A- 2004 360 970
- KR-A- 20100 130 137
- US-A1- 2010 282 435
- "Regeln und Steuern von Heizungsanlagen passage", 1 January 2004 (2004-01-01), REGELN UND STEUERN VON HEIZUNGSANLAGEN, SIEMENS, DE, PAGE(S) 1 - 131, XP003026630, * the whole document *

## Description

### TECHNICAL FIELD

The present invention relates to a heat storing apparatus having a cascade cycle and a control process of the same, and more particularly, to a heat storing apparatus having a cascade cycle that can store heat in a heat storage tank with air as a heat source and a control process of the same.

### BACKGROUND

US2010/0282435 A1 discloses a heat storing apparatus according the preamble of claim 1. This document describes an air-conditioning hot water supply complex system, wherein it is judged whether the outside air temperature is above a threshold value or not.

In general, a heat storing apparatus which heats a heat medium required for a heat demander includes an electric boiler connected with the heat demander through a heat medium pipe and a pump installed on the heat medium pipe to circulate the heat medium to the heat demander and the electric boiler.

An electric heater heating the heat medium is incorporated in the electric boiler and the heat medium is heated by the electric heater in the electric boiler and thereafter, moves to the heat demander when the pump is driven to heat the heat demander.

In the electric boiler, a target heat storage temperature is generally set based on a time when an outdoor temperature is low, e.g., wintertime and the electric heater is on or off so that the temperature of the electric boiler maintains the target heat storage temperature.

### SUMMARY

Since a heat storing apparatus in the related art stores heat by using an electric heater having low efficiency, power consumption is large and since a target heat storage temperature is set based on a time (e.g., wintertime) when an outdoor temperature is low, the heat storing apparatus operates in a full load regardless of the outdoor temperature, and as a result, unnecessary energy is used.

The present invention has been made in an effort to provide a heat storing apparatus having a cascade cycle that can solve a power peak problem of a power supplier and reduce electric charges by varying the target heat storage temperature according to the outdoor temperature while using a heat pump.

The present invention also has been made in an effort to provide a control process of a heat storing apparatus having a cascade cycle that can reduce the amount of used energy by using minimum energy depending on the change in outdoor temperature.

According to the present invention the above objective is solved by the features of claim 1.

The controller sets the target heat storage temperature between a minimum target heat storage temperature and a maximum target heat storage temperature.

The controller sets the maximum target heat storage temperature as the target heat storage temperature when the outdoor temperature is equal to or lower than a lowerlimit set temperature and the minimum target heat storage temperature as the target heat storage temperature when the outdoor temperature is equal to or higher than an upperlimit set temperature.

The controller sets the target heat storage temperature to be inversely proportionate to the outdoor temperature when the outdoor temperature is higher than the lowerlimit set temperature and lower than the upperlimit set temperature.

The controller may variably control an input frequency of the first inverter compressor and an input frequency of the second inverter compressor according to the target heat storage temperature.

The controller may set the target heat storage temperature depending on the outdoor temperature at a set time interval.

The heat storing apparatus may further include a heat medium pump installed on the heat medium path to pump the heat medium and a midnight power supplying line through which midnight power may be supplied is connected to the heat pump and a general power supplying line through which general power may be supplied is connected to the heat medium pump.

The heat storing apparatus may further include: a bypass path through which the heat medium discharged from the heat storage tank bypasses the heat demander; and a path switching valve allowing the heat medium discharged from the heat storage tank to flow to the heat demander or the bypass path.

The heat medium path switching valve may have a heating and heat storage mode in which the heat medium flows to the heat demander and a heat storage mode in which the heat medium flows to the bypass path.

The first inverter compressor, the first expansion mechanism, and the outdoor heat exchanger may be installed in an outdoor unit, and the cascade heat exchanger, the second inverter compressor, the heat storage heat exchanger, and the second expansion mechanism may be installed in an indoor unit.

Another exemplary embodiment of the present invention provides a control process of a heat storing apparatus having a cascade cycle, including: sensing, by an outdoor temperature sensor, an outdoor temperature; setting a target heat storage temperature of the heat storage tank to be a high value when the sensed outdoor temperature is low and setting the target heat storage temperature of the heat storage tank to be a low value when the sensed outdoor temperature is high; and driving a heat pump according to the set target heat storage temperature.

In the setting of the target heat storage temperature, the target heat storage temperature may be set between a minimum target heat storage temperature and a maximum target heat storage temperature.

In the setting of the target heat storage temperature, the maximum target heat storage temperature may be set as the target heat storage temperature when the outdoor temperature is equal to or lower than a lowerlimit set temperature and the minimum target heat storage temperature may be set as the target heat storage temperature when the outdoor temperature is equal to or higher than an upperlimit set temperature.

In the setting of the target heat storage temperature, the target heat storage temperature may be set to be inversely proportionate to the outdoor temperature when the outdoor temperature is higher than the lowerlimit set temperature and lower than the upperlimit set temperature.

The sensing of the outdoor temperature, the setting of the target heat storage temperature, and the driving of the heat pump may be repeated at a set time interval.

According to the exemplary embodiments of the present invention, when the outdoor temperature is high while the heat pump which is more efficient than the electric heater, power used in the heat pump can be reduced, and as a result, the power peak of the power supplier can be improved and electric charges of a consumer can be reduced.

Further, since power consumption corresponding to the outdoor temperature can be used, the amount of used energy can be minimized while increasing heating efficiency.

### BRIEF DESCRIPTION OF THE DRAWINGS

FIG. 1 is a configuration diagram of a heat storing apparatus having a cascade cycle according to an exemplary embodiment of the present invention;
FIG. 2 is a control block diagram of the heat storing apparatus having the cascade cycle according to the exemplary embodiment of the present invention;
FIG. 3 is a graph showing a target storage temperature depending on an outdoor temperature of the heat storing apparatus having the cascade cycle according to the exemplary embodiment of the present invention;
FIG. 4 is a graph showing both the outdoor temperature and a final heat storage temperature of the heat storing apparatus having the cascade cycle according to the exemplary embodiment of the present invention as time elapsed;
FIG. 5 is a flowchart showing a control process of a heat storing apparatus having a cascade cycle according to an exemplary embodiment of the present invention; and
FIG. 6 is a configuration diagram of a heat storing apparatus having a cascade cycle according to another exemplary embodiment of the present invention.

### DETAILED DESCRIPTION

Hereinafter, exemplary embodiments of the present invention will be described in detail with reference to the accompanying drawings.

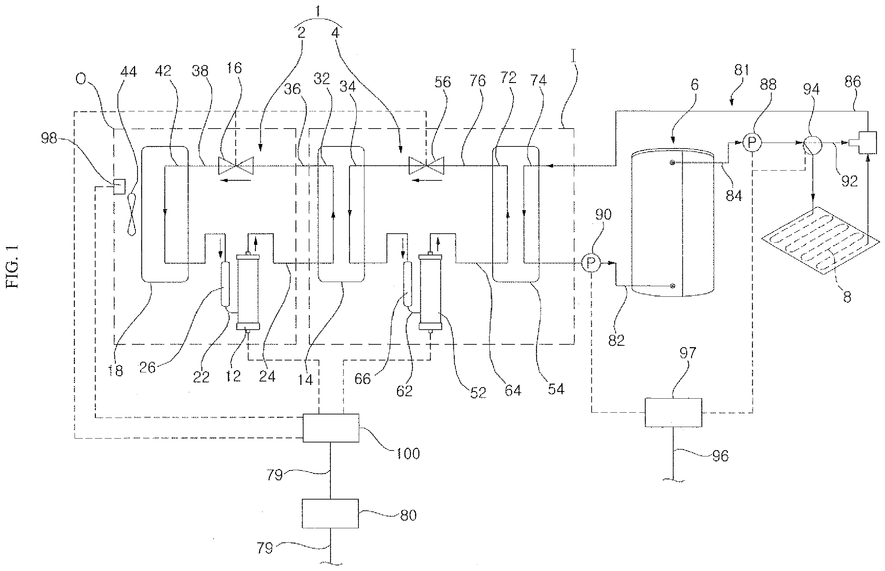

FIG. 1 is a configuration diagram of a heat storing apparatus having a cascade cycle according to an exemplary embodiment of the present invention.

The heat storing apparatus having the cascade cycle according to the exemplary embodiment may include a heat pump 1 and a heat storage tank 6 storing heat by the heat pump 1 as shown in FIG. 1.

The heat pump 1 may include a low-temperature cooling cycle 2 where a first refrigerant is circulated and a high-temperature cooling cycle 4 where a second refrigerant is circulated.

In the low-temperature cooling cycle 2, the first refrigerant is circulated to a first inverter compressor 12, a cascade heat exchanger 14, a first expansion mechanism 16, and an outdoor heat exchanger 18, and the first refrigerant may evaporate the second refrigerant while passing through the cascade heat exchanger 14.

The first refrigerant and the second refrigerant may be composed of refrigerants having different condensation temperatures and evaporation temperatures. For example, when the first refrigerant is R410A having a low condensation temperature and a low evaporation temperature, the second refrigerant may be composed of R134a which is higher in condensation temperature and evaporation temperature than the first refrigerant.

In the low-temperature cooling cycle 2, the first inverter compressor 12, the cascade heat exchanger 14, the first expansion mechanism 16, and the outdoor heat exchanger 18 may be connected with each other through a refrigerant pipe and the first refrigerant flows to the first inverter compressor 12, the cascade heat exchanger 14, the first expansion mechanism 16, the outdoor heat exchanger 18, and the first inverter compressor 12 in sequence.

The first inverter compressor 12 may be constituted by a compressor of which a compression capacity varies according to the magnitude of an input frequency. A suction refrigerant pipe 22 through which the first refrigerant is sucked into the first inverter compressor 12 may be connected to the first inverter compressor 12. A discharge refrigerant pipe 24 through which the first refrigerant compressed in the first inverter compressor 12 is discharged may be connected to the first inverter compressor 12. An accumulator 26 storing the liquid refrigerant in the first refrigerant may be installed in the suction refrigerant pipe 22. The discharge refrigerant pipe 24 may be connected to the cascade heat exchanger 14.

The cascade heat exchanger 14 is a heat exchanger that is common to the lower-temperature cooling cycle 2 and the high-temperature cooling cycle 4. The cascade heat exchanger 14 may include a first refrigerant path 32 through which the first refrigerant passes and a second refrigerant path 34 through which the second refrigerant passes. In the cascade heat exchanger 14, the first refrigerant may be condensed while dissipating heat to the second refrigerant at the time of passing through the first refrigerant path 32. In the cascade heat exchanger 14, the second refrigerant may be evaporated while absorbing the heat of the first refrigerant at the time of passing through the second refrigerant path 34. The cascade heat exchanger 14 may be constituted by a plate type heat exchanger in which the first refrigerant path 32 and the second refrigerant path 34 are alternately formed. The cascade heat exchanger 14 may be constituted by a dual pipe heat exchanger in which any one of the first refrigerant path 32 and the second refrigerant path 34 is placed outside the other one. In the cascade heat exchanger 14, the first refrigerant path 32 may be connected to the discharge refrigerant pipe 24. The cascade heat exchanger 14 may be connected with the low-pressure expansion mechanism 16 through a cascade heat exchanger-first expansion mechanism connection pipe 36. The cascade heat exchanger-first expansion mechanism connection pipe 36 may be connected to the first refrigerant path 32 of the cascade heat exchanger 14.

The first expansion mechanism 16 may be constituted by a solenoid expansion valve of which an opening degree can be controlled. The first expansion mechanism 16 may be connected with the outdoor heat exchanger 18 through a first expansion mechanism-outdoor heat exchanger connection pipe 38.

The heat pump 1 may be constituted by an air heat source heat pump in which the first refrigerant takes heat of outdoor air while passing the outdoor heat exchanger 18.

The outdoor heat exchanger 18 may be constituted by an air-refrigerant heat exchanger in which the outdoor air and the first refrigerant exchange heat. The outdoor heat exchanger 18 may include a first refrigerant path 42 through which the first refrigerant passes. The outdoor heat exchanger 18 may be constituted by a pin-tube type heat exchanger including a tube forming the first refrigerant path 42 and a pin coupled to the tube. The heat storing apparatus having the cascade cycle may further include an outdoor fan 44 that allows the outdoor air to flow to the outdoor heat exchanger 18. The first refrigerant path 42 may be connected to the first expansion mechanism-outdoor heat exchanger connection pipe 38. The first refrigerant path 42 may be connected to the discharge refrigerant pipe 24.

In the high-temperature cooling cycle 4, the second refrigerant is circulated to a second inverter compressor 52, a heat storage heat exchanger 54, a second expansion mechanism 56, and the cascade heat exchanger 14. The second refrigerant may heat the heat medium while passing through the heat storage heat exchanger 54. As the heat medium, an antifreezing solution or water may be used.

In the high-temperature cooling cycle 4, the high-pressure compressor 52, the heat storage heat exchanger 54, the second expansion mechanism 56, and the cascade heat exchanger 14 may be connected through the refrigerant pipe. The second refrigerant may flow to the second inverter compressor 52, the heat storage heat exchanger 54, the second expansion mechanism 56, the cascade heat exchanger 14, and the second inverter compressor 52 in sequence.

The second inverter compressor 52 may be constituted by a compressor of which a compression capacity varies according to the magnitude of an input frequency like the first inverter compressor 12. The suction refrigerant pipe 62 through which the second refrigerant is sucked into the second inverter compressor 52 may be connected to the second inverter compressor 52. The discharge refrigerant pipe 64 through which the second refrigerant compressed in the second inverter compressor 52 may be connected to the second inverter compressor 52. The suction refrigerant pipe 62 may be connected to the second refrigerant path 34 of the cascade heat exchanger 14. The discharge refrigerant pipe 64 may be connected to the heat storage heat exchanger 54. An accumulator 66 storing the liquid refrigerant in the second refrigerant may be installed in the suction refrigerant pipe 62.

The heat storage heat exchanger 54 is the heat exchanger in which the second refrigerant and the heat medium exchange heat. The heat storage heat exchanger 54 may include a second refrigerant path 72 through which the second refrigerant passes and a heat medium heat absorption path 74 through which the heat medium passes. The second refrigerant may be condensed while dissipating heat to the heat medium while passing through the second refrigerant path 72. The heat medium may be heated while absorbing heat of the second refrigerant at the time of passing through the heat medium refrigerant path 34. The heat storage heat exchanger 54 may be constituted by a plate type heat exchanger in which the second refrigerant path 72 and the heat medium heat absorption path 74 are alternately formed. The heat storage heat exchanger 54 may be constituted by a dual pipe heat exchanger in which any one of the second refrigerant path 72 and the heat medium heat absorption path 74 is placed outside the other one. In the hest storage heat exchanger 54, the second refrigerant path 72 may be connected to the discharge refrigerant pipe 64. The heat storage heat exchanger 54 may be connected with the second expansion mechanism 56 through a heat storage heat exchanger-second expansion mechanism connection pipe 76. The heat storage heat exchanger-second expansion mechanism connection pipe 76 may be connected to the second refrigerant path 72 of the heat storage heat exchanger 54.

The second expansion mechanism 56 may be constituted by a solenoid expansion valve of which an opening degree can be controlled. The second expansion mechanism 56 may be connected with the cascade heat exchanger 14 through a second expansion mechanism-cascade heat exchanger connection pipe 78. The second expansion mechanism-cascade heat exchanger connection pipe 78 may be connected to the second refrigerant path 34 of the cascade heat exchanger 14.

The heat storing apparatus having the cascade cycle may be constituted by an integrated heat storing apparatus in which the low-temperature cooling cycle 2 and the high-temperature cooling cycle 4 are installed together in one case.

The heat storing apparatus having the cascade cycle may be constituted by a separated heat storing apparatus in which the low-temperature cooling cycle 2 and the high-temperature cooling cycle 4 are distributively placed in an outdoor unit O installed in an outdoor area and an indoor unit I installed in an indoor area.

The heat storing apparatus having the cascade cycle is preferably constituted by the separated heat storing apparatus having the outdoor unit O and the indoor unit I. The first inverter compressor 12, the first expansion mechanism 16, the outdoor heat exchanger 18, and the outdoor fan 44 may be installed in the outdoor unit O. The cascade heat exchanger 14, the second inverter compressor 52, the heat storage heat exchanger 54, and the second expansion mechanism 56 may be installed in the indoor unit I.

The heat pump 1 may be driven by midnight power and a midnight power supplying line 79 through which the midnight power is supplied may be connected to the heat pump 1. The heat pump 1 may include a midnight power supplying unit 80 that allows power to be supplied through the midnight power supplying line 79 in only midnight times. The midnight power supplying unit 80 has a timer to allow the midnight power to pass only in predetermined times.

The heat storage tank 6 is connected with the heat storage heat exchanger 54 through a heat medium path 81 to store heat of the heat medium heated in the heat storage heat exchanger 54. The heat storage tank 6 is connected with a heat demander 8 to allow the stored heat to be used in the heat demander 8. The heat storage tank 6 may be constituted by a bath in which the heat medium is introduced and stored. The heat storage tank 6 is connected with the heat demander 8 through the heat medium path 81 to move the heat medium heated in the heat storage heat exchanger 54 which is stored in the heat storage tank 6 to the heat demander 8.

The heat demander 8 may be constituted by a floor heating pipe installed in an indoor floor. The heat demander 8 may be constituted by a radiator installed in the indoor area. The heat demander 8 may be constituted by a fan coil unit. That is, the heat demander 8 may include a coil through which the heat medium passes, a fan that makes indoor air to flow to the coil, and a casing in which the coil and the fan are installed and an air suction port in which the indoor air is sucked and an air exhaust port in which air heat-exchanged by the coil is exhausted.

The heat medium path 81 may be configured to circulate the heat medium in the heat storage heat exchanger 54, the heat storage tank 6, and the heat demander 8. The heat medium path 81 may include a heat storage heat exchanger-heat storage tank connection path 82 connecting the heat medium heat absorption path 74 of the heat storage heat exchanger 54 and the heat storage tank 6, a heat storage tank-heat demander connection pipe 84 connecting the heat storage tank 6 and the heat demander 8, and a heat demander-heat storage heat exchanger connection pipe 86 connecting the heat demander 8 and the heat medium heat absorption path 74 of the heat storage heat exchanger 54.

Heat medium pumps 88 and 90 pumping the heat medium may be installed in the heat medium path 81. The heat medium pumps 88 and 90 may include a heat demander pump 88 installed in the heat storage tank-heat demander connection pipe 84. The heat medium pumps 88 and 90 may include a heat storage tank 90 installed in the heat storage heat exchanger-heat storage tank connection pipe 82. The heat medium pumps 88 and 90 may be driven at a predetermined time interval in order to prevent the heat medium path 81 from being frozen or the heat medium heat absorption path 74 from being frozen. The heat medium pumps 88 and 90 may be driven at a predetermined time interval regardless of the outdoor temperature. The heat medium pumps 88 and 90 may be driven at a predetermined time interval only when the outdoor temperature is equal to or less than a set temperature.

A bypass path 92 in which the heat medium discharged from the heat storage tank 6 to bypass the heat demander 8 may be formed in the heat medium path 81.

A heat medium path switching valve 94 that allows the heat medium discharged from the heat storage tank 6 to flow to the heat demander 8 or to the bypass path 92 may be installed in the heat medium path 81.

The heat medium path switching valve 94 may have a heating and heat storage mode in which the heat medium flows to the heat demander 8 and a heat storage mode in which the heat medium flows to the bypass path 92. The heat medium may be circulated to the heat storage heat exchanger 54, the heat storage tank 6, and the heat demander 8 in the heating and heat storage mode. The heat medium may be circulated to the heat storage heat exchanger 54 and the heat storage tank 6 in the heat storage mode.

In the heat storing apparatus having the cascade cycle, since the heat medium pumps 88 and 90 may be driven to prevent freezing in times other than the midnight, a general power supplying line 96 may be connected to the heat medium pumps 88 and 90 and the heat medium path switching valve 94. The general power supplying unit 97 may supply or interrupt power supplied through the general power supplying line 96 to the heat medium pumps 88 and 90 and the heat medium path switching valve 94.

The heat pump 1 may be driven when the temperature of the heat storage tank 6 is equal to or lower than the target heat storage temperature. When the heat pump 1 is driven, the first inverter compressor 12 and the second inverter compressor 52 may be driven and the outdoor fan 44 may be driven and an opening degree of the first expansion mechanism 16 and an opening degree of the second expansion mechanism 56 may be controlled.

The storing apparatus having the cascade cycle may include a temperature sensor (not shown) that measures the temperature of the heat storage tank 6 or measures the temperature of the heat medium discharged from the heat storage tank 6. The heat pump 1 may be driven when the temperature measured by the temperature sensor is equal to or lower than the target heat storage temperature. The heat pump 1 may be stopped when the temperature measured by the temperature sensor is higher than the target heat storage temperature.

The heat storing apparatus having the cascade cycle may be operated in the heating and heat storage mode when there is a load of the heat demander 8 at the time of driving the heat pump 1 and in the heat storage mode when there is no load of the heat demander 8 at the time of driving the heat pump 1.

In the heat storing apparatus having the cascade cycle, in the heating and heat storage mode, the heat medium pumps 88 and 90 are driven and heat medium path switching valve 94 may be controlled in the heating and heat storage mode.

In the heat storing apparatus having the cascade cycle, in the heat storage mode, the heat medium pumps 88 and 90 are driven and the heat medium path switching valve 94 may be controlled in the heat storage mode.

In the heat storing apparatus having the cascade cycle, the target heat storage temperature of the heat storage tank may be set differently from the outdoor temperature. In the heat storing apparatus having the cascade cycle, the heat pump 1 may be driven according to the set target heat storage temperature.

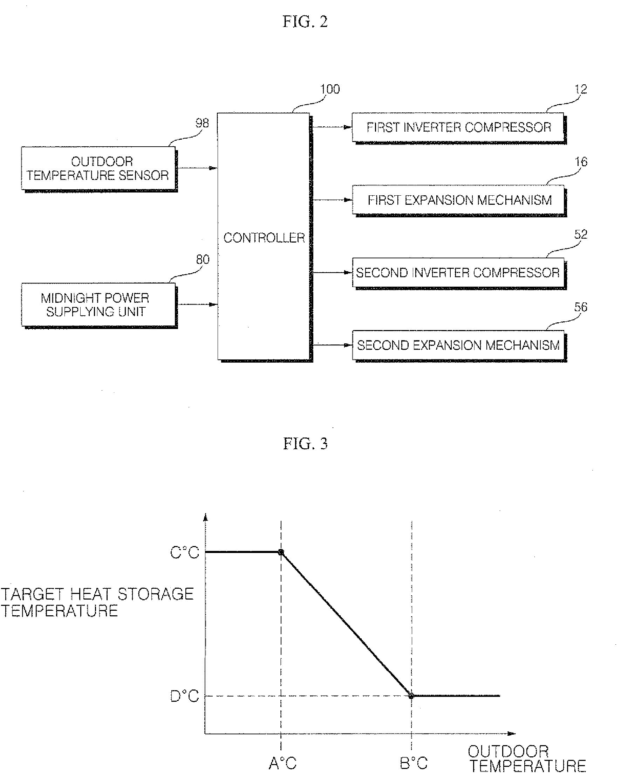

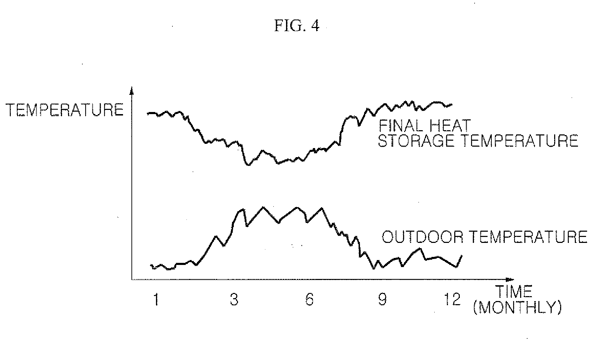

FIG. 2 is a control block diagram of the heat storing apparatus having the cascade cycle according to the exemplary embodiment of the present invention, FIG. 3 is a graph showing a target storage temperature depending on an outdoor temperature of the heat storing apparatus having the cascade cycle according to the exemplary embodiment of the present invention, and FIG. 4 is a graph showing both the outdoor temperature and a final heat storage temperature of the heat storing apparatus having the cascade cycle according to the exemplary embodiment of the present invention as time elapsed.

The heat storing apparatus having the cascade cycle may include an outdoor temperature sensor 98 and a controller 100 as shown in FIGS. 1 and 2.

The outdoor temperature sensor 98 may sense the outdoor temperature.

The controller may set the target heat storage temperature of the heat storage tank 6 to be a high value when the outdoor temperature sensed by the outdoor temperature sensor 98 is low. The controller 100 may set the target heat storage temperature of the heat storage tank 6 to be a low value when the outdoor temperature is high. The controller 100 may drive the hat pump according to the target heat storage temperature of the heat storage tank 6.

The target heat storage temperature is a desired heat storage temperature of the heat storage tank 6. As the target heat storage temperature, a minimum target heat storage temperature and a maximum target heat storage temperature may be set in advance. The target heat storage temperature may be set between the minimum target heat storage temperature and the maximum target heat storage temperature.

The controller may set the maximum target heat storage temperature (C°C) as the target heat storage temperature when the outdoor temperature is equal to or lower than a lowerlimit set temperature (A°C).

The controller may set the minimum target heat storage temperature (D°C) as the target heat storage temperature when the outdoor temperature is equal to or lower than an upperlimit set temperature (B°C).

The controller may set the target heat storage temperature to be inversely proportionate to the outdoor temperature when the outdoor temperature is higher than the lowerlimit set temperature (A°C) and lower than the upperlimit set temperature (B°C).

The controller may variably control the input frequencies of the first inverter compressor 12 and the second inverter compressor 52 and control the opening degrees of the first expansion mechanism 16 and the second expansion mechanism 56.

The controller 100 increases the input frequency of at least one of the first inverter compressor 12 and the second inverter compressor 52 to set the temperature of the heat medium discharged form the heat storage heat exchanger 54 to be the high value and controls the opening degrees of the first expansion mechanism 16 and the second expansion mechanism 56 when the target heat storage temperature is set to the high value.

The controller 100 decreases the input frequency of at least one of the first inverter compressor 12 and the second inverter compressor 52 to set the temperature of the heat medium discharged form the heat storage heat exchanger 54 to be the low value and controls the opening degrees of the first expansion mechanism 16 and the second expansion mechanism 56 when the target heat storage temperature is set to the low value.

The controller may set the input frequencies of the first inverter compressor 12 and the second inverter compressor 52 to the maximum input frequency and controls the opening degrees of the first expansion mechanism 16 and the second expansion mechanism 56 when the maximum target heat storage temperature is set as the target heat storage temperature.

The controller may set the input frequencies of the first inverter compressor 12 and the second inverter compressor 52 to the minimum input frequency and controls the opening degrees of the first expansion mechanism 16 and the second expansion mechanism 56 when the minimum target heat storage temperature is set as the target heat storage temperature.

The controller 100 sets the target heat storage temperature depending on the outdoor temperature at a set time interval (e.g., 1 hour) and variably controls the input frequencies of the first inverter compressor 12 and the second inverter compressor 52 according to a changed target heat storage temperature when the target heat storage temperature varies depending on the change in outdoor temperature.

When the heat pump 1 is driven as described above, the outdoor temperature is high in summertime (e.g., approximately 2 to 9 months) and low in wintertime (approximately 9 to 2 months), while the final heat storage temperature of the heat storage tank 6 is low in summertime and high in wintertime as shown in FIG. 4.

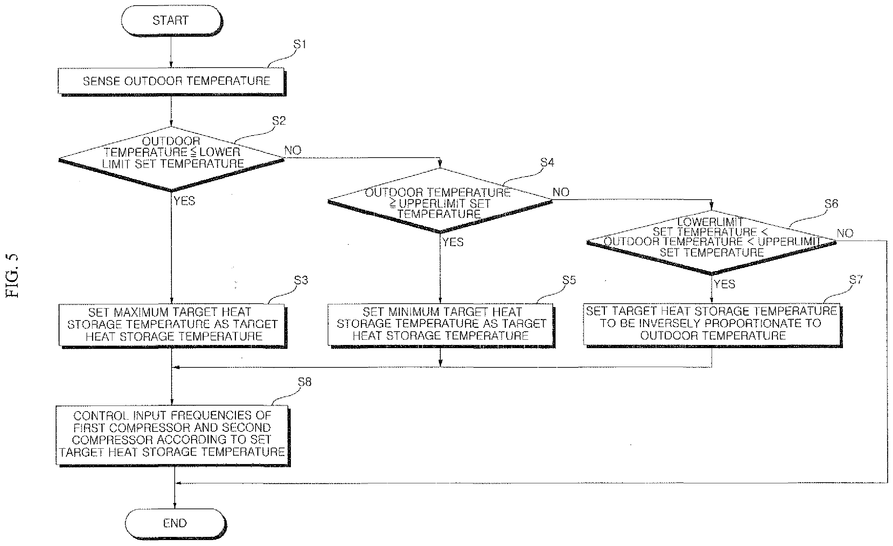

FIG. 5 is a flowchart showing a control process of a heat storing apparatus having a cascade cycle according to an exemplary embodiment of the present invention.

The control process of the heat storing apparatus having the cascade cycle may include sensing an outdoor temperature (S1), setting a target heat storage temperature (S2, S3, S4, S5, S6, and S7), and driving a heat pump (S8).

In the sensing of the outdoor temperature (S1), an outdoor temperature sensor 98 senses the outdoor temperature and the outdoor temperature sensor 98 outputs the outdoor temperature to a controller 100.

In the setting of the target heat storage temperature (S2, S3, S4, S5, S6, and S7), when the sensed outdoor temperature is low, the target heat storage temperature of the heat storage tank 6 may be set to be high and when the sensed outdoor temperature is high, the target heat storage temperature of the heat storage tank 6 may be set to be low.

In the setting of the target heat storage temperature, the target heat storage temperature may be set between a minimum target heat storage temperature and a maximum target heat storage temperature.

In the setting of the target heat storage temperature, when the outdoor temperature is equal to or lower than a lowerlimit set temperature, the maximum target heat storage temperature may be set as the target heat storage temperature (S2 and S3).

In the setting of the target heat storage temperature, when the outdoor temperature is equal to or higher than an upperlimit set temperature, the minimum target heat storage temperature may be set as the target heat storage temperature (S4 and S5).

In the setting of the target heat storage temperature, when the outdoor temperature is higher than the lowerlimit set temperature and lower than the upperlimit set temperature, the temperature between the maximum target heat storage temperature and the maximum heat storage temperature may be set as the target heat storage temperature. In this case, the target heat storage temperature may be set to be inversely proportionate to the outdoor temperature (S6 and S7).

In the driving of the heat pump (S8), the heat pump 1 may be driven according to the set target heat storage temperature.

Herein, the sensing of the outdoor temperature (S1), the setting of the target heat storage temperature (S2, S3, S4, S5, S6, and S7), and the driving of the heat pump (S8) may be repeated at a set time interval (e.g., 1 hour).

Hereinafter, the driving of the heat pump 1 (S8) will be described.

As the first inverter compressor 12, an inverter compressor having a maximum input frequency of m hz and a minimum input frequency of n hz may be used and as the second inverter compressor 52, an inverter compressor having a maximum input frequency of p hz and a minimum input frequency of q hz may be used.

In the driving of the heat pump (S8), when the maximum target heat storage temperature is set as the target heat storage temperature, the controller 100 may input the maximum input frequency of m hz into the first inverter compressor 12 and the maximum input frequency of p hz into the second inverter compressor 52.

In the driving of the heat pump (S8), when the minimum target heat storage temperature is set as the target heat storage temperature, the controller 100 may input the minimum input frequency of n hz into the first inverter compressor 12 and the minimum input frequency of q hz into the second inverter compressor 52.

In the driving of the heat pump (S8), when the temperature between the minimum target heat storage temperature and the maximum target heat storage temperature is set as the target heat storage temperature, the controller 100 may input a predetermined frequency between the maximum input frequency of m hz and the minimum input frequency of n hz into the first inverter compressor 12 and a predetermined frequency between the maximum input frequency of p hz and the minimum input frequency of q hz into the second inverter compressor 52. In this case, the controller 100 may control both the predetermined frequency input into the first inverter compressor 12 and the predetermined frequency input into the second inverter compressor 52 to be high or low.

When the first inverter compressor 12 is driven, the high-temperature and high-pressure first refrigerant is discharged from the first inverter compressor 12 and the first refrigerant flows to the cascade heat exchanger 14 to be condensed while exchanging heat with the second refrigerant. The condensed refrigerant is expanded while passing through the first expansion mechanism 16, flows to the outdoor heat exchanger 18 to be evaporated while exchanging heat with outdoor air in the outdoor heat exchanger, and is sucked into the first inverter compressor 12. That is, the first refrigerant is evaporated in the outdoor heat exchanger 18 and condensed in the cascade heat exchanger 14 to evaporate the second refrigerant.

When the second inverter compressor 52 is driven, the high-temperature and high-pressure second refrigerant is discharged from the second inverter compressor 52 and the second refrigerant passes through the heat storage heat exchanger 54 to be condensed while exchanging heat with the heat medium. The condensed refrigerant is expanded while passing through the second expansion mechanism 56 and thereafter, flows to the cascade heat exchanger 14 to be evaporated while exchanging heat with the first refrigerant. The evaporated second refrigerant is sucked into the first inverter compressor 52. That is, the second refrigerant is evaporated in the cascade heat exchanger 14 and condensed in the heat storage heat exchanger 54 to heat the heat medium.

The heat medium heated while exchanging heat with the second refrigerant in the heat storage heat exchanger 54 moves to the heat storage tank 6 to be stored in the heat storage tank 6 in a heat storage mode. The heat medium of the heat storage tank 6 bypasses the heat demander 8 to flow to the heat storage heat exchanger 54 again. That is, the heat medium is circulated to the heat storage heat exchanger 54 and the heat storage tank 6 to heat the heat demander 8.

Meanwhile, the heat medium heated while exchanging heat with the second refrigerant in the heat storage heat exchanger 54 moves to the heat storage tank 6 to be stored in the heat storage tank 6 in a heating and heat storage mode. The heat medium of the heat storage tank 6 flows to the heat demander 8 to transfer heat to the heat demander 8 and thereafter, flows to the heat storage heat exchanger 54 again to exchange heat with the second refrigerant. That is, the heat medium is circulated to the heat storage heat exchanger 54, the heat storage tank 6, and the heat demander 8 to heat the heat demander 8.

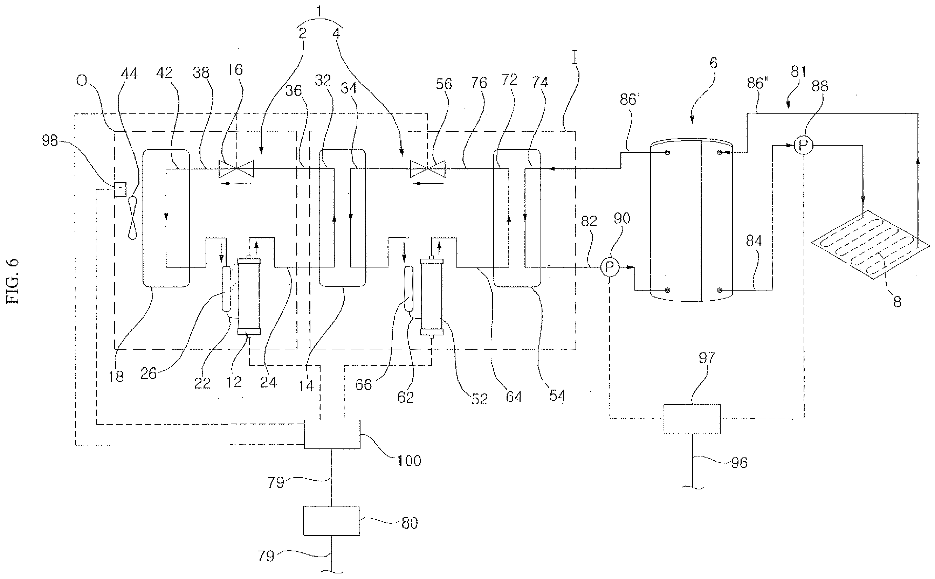

FIG. 6 is a configuration diagram of a heat storing apparatus having a cascade cycle according to another exemplary embodiment of the present invention.

In the heat storing apparatus having the cascade cycle according to the exemplary embodiment, as shown in FIG. 5, the heat storage tank 6 is connected with the heat storage heat exchanger 54 through the first het medium path, the heat storage tank 6 is connected with the heat demander 8 through the second heat medium path, and since configurations and operations other than the heat storage tank 6, the first heat medium path, and the second heat medium path are the same or similarly as those of the first exemplary embodiment, a detailed description will be omitted.

The first heat medium path may include a first heat storage heat exchanger-heat storage tank connection path 82 in which the heat medium heated in the heat storage heat exchanger 54 is supplied to the heat storage tank 6 and a second heat storage heat exchanger-heat storage tank connection path 86' in which the heat medium discharged from the heat storage tank 6 is supplied to the heat storage heat exchanger 54. A heat storage tank pump 90 may be installed in the first heat storage heat exchanger-heat storage tank connection path 82.

The second heat medium path may include a first heat storage tank-heat demander connection path 84 in which the heat medium heated in the heat storage tank 6 is supplied to the heat demander and a second heat storage tank-heat demander connection path 86" in which the heat medium discharged from the heat demander 8 is supplied to the heat storage tank 6. A heat demander pump 88 may be installed in the first heat storage tank-heat demander connection path 84.

In the heat storing apparatus having the cascade cycle according to the exemplary embodiment, when the heat pump 1 is driven, the heat storage tank pump 90 may be driven and when the heat demander 8 has a load, the heat demander pump 88 may be driven.

That is, when the heat pump 1 is driven the heat medium flows by the heat storage tank pump 90 to heat the heat storage tank 6 while circulating the heat storage heat exchanger 54 and the heat storage tank 6. In addition, when the heat demander pump 88 is driven, the heat medium of the heat storage tank 6 flows by the heat demander pump 88 to heat the heat demander 8 while circulating the heat storage tank 6 and the heat demander 8.

## Claims

1. A heat storing apparatus having a cascade cycle, comprising:
a heat pump (1) having a low-temperature cooling cycle (2) in which a first refrigerant is circulated to a first inverter compressor (12), a cascade heat exchanger (14), a first expansion mechanism (16), and an outdoor heat exchanger (18) and the first refrigerant evaporates a second refrigerant while passing through the cascade heat exchanger and a high-temperature cooling cycle (4) in which the second refrigerant is circulated to a second inverter compressor (52), a heat storage heat exchanger (54), a second expansion mechanism (56), and the cascade heat exchanger (14) and the second refrigerant heats a heat medium while passing through the heat storage heat exchanger (54);
a heat storage tank (6) connected with the heat storage heat exchanger through a heat medium path;
an outdoor temperature sensor (98) sensing an outdoor temperature; and
a controller (100) adapted to set a target heat storage temperature of the heat storage tank (6),
**characterized in that**
the controller (100) is adapted to set the target heat storage temperature between a minimum target heat storage temperature and a maximum target heat storage temperature, and to set the maximum target heat storage temperature as the target heat storage temperature when the outdoor temperature is equal to or lower than a lowerlimit set temperature and the minimum target heat storage temperature as the target heat storage temperature when the outdoor temperature is equal to or higher than an upperlimit set temperature,
wherein the controller (100) is adapted to set the target heat storage temperature to be inversely proportionate to the outdoor temperature when the outdoor temeprature is higher than the lowerlimit set temperature and lower than the upperlimit set temperature.

2. The heat storing apparatus having a cascade cycle of claim 1, wherein the controller (100) is adapted to variably control an input frequency of the first inverter compressor and an input frequency of the second inverter compressor according to the target heat storage temperature.

3. The heat storing apparatus having a cascade cycle of claim 1 or 2, wherein the controller (100) is adapted to set the target heat storage temperature depending on the outdoor temperature at a set time interval.

4. The heat storing apparatus having a cascade cycle of any one of claims 1-3, further comprising:
a heat medium pump (88; 90) installed on the heat medium path to pump the heat medium,
wherein a midnight power supplying line through which midnight power is supplied is connected to the heat pump, and
a general power supplying line through which general power is supplied is connected to the heat medium pump.

5. The heat storing apparatus having a cascade cycle of any one of claims 1-4, further comprising:
a heat demander (8);
a bypass path (92) through which the heat medium discharged from the heat storage tank bypasses the heat demander; and
a heat medium path switching valve (94) allowing the heat medium discharged from the heat storage tank to flow to the heat demander or the bypass path.

6. The heat storing apparatus having a cascade cycle of claim 5, wherein the heat medium path switching valve has a heating and heat storage mode in which the heat medium flows to the heat demander and a heat storage mode in which the heat medium flows to the bypass path.

7. The heat storing apparatus having a cascade cycle of any one of claims 1-6, wherein the first inverter compressor (12), the first expansion mechansim (16), and the outdoor heat exchanger (18) are installed in an outdoor unit, and
the cascade heat exchanger (14), the second inverter compressor (52), the heat storage heat exchanger (54), and the second expansion mechanism (56) are installed in an indoor unit.

8. A control process of a heat storing apparatus having a cascade cycle of any one of the preceding claims, comprising:
sensing, by an outdoor temperature sensor, an outdoor temperature;
setting a target heat storage temperature of the heat storage tank; and
driving a heat pump according to the set target heat storage temperature,
**characterized in that**
in the setting of the target heat storage temperature, the target heat storage temperature is set between a minimum target heat storage temperature and a maximum target heat storage temperature, and
the maximum target heat storage temperature is set as the target heat storage temperature when the outdoor temperature is equal to or lower than a lowerlimit set temperature and the minimum target heat storage temperature is set as the target heat storage temperature when the outdoor temperature is equal to or higher than an upperlimit set temperature,
wherein in the setting of the target heat storage temperature, the target heat storage temperature is set to be inversely proportionate to the outdoor temperature when the outdoor temperature is higher than the lowerlimit set temperature and lower than the upperlimit set temperature.

9. The control process of claim 8, wherein the sensing of the outdoor temperature, the setting of the target heat storage temperature, and the driving of the heat pump are repeated at a set time interval.

## Patentansprüche

1. Wärmespeichervorrichtung mit einem Kaskadenkreis, die aufweist:
eine Wärmepumpe (1) mit einem Niedrigtemperatur-Kühlkreis (2), in dem ein erstes Kältemittel zu einem ersten Wechselrichterkompressor (12), einem Kaskadenwärmetauscher (14), einem ersten Expansionsmechanismus (16) und einem Außenwärmetauscher (18) zirkuliert wird und das erste Kältemittel ein zweites Kältemittel verdampft, während es durch den Kaskadenwärmetauscher strömt, und mit einem Hochtemperatur-Kühlkreis (4), in dem das zweite Kältemittel zu einem zweiten Wechselrichterkompressor (52), einem Wärmespeicher-Wärmetauscher (54), einem zweiten Expansionsmechanismus (56) und dem Kaskadenwärmetauscher (14) zirkuliert wird und das zweite Kältemittel ein Wärmemittel aufheizt, während es durch den Wärmespeicher-Wärmetauscher (54) strömt;
einen Wärmespeichertank (6), der mit dem Wärmespeicher-Wärmetauscher durch einen Wärmemittelweg verbunden ist;
einen Außentemperatursensor (98), der eine Außentemperatur abtastet; und
eine Steuerung (100), die geeignet ist, eine Wärmespeicher-Zieltemperatur des Wärmespeichertanks (6) einzustellen,
**dadurch gekennzeichnet, dass**
die Steuerung (100) geeignet ist, die Wärmespeicher-Zieltemperatur zwischen einer minimalen Wärmespeicher-Zieltemperatur und einer maximalen Wärmespeicher-Zieltemperatur einzustellen, und die maximale Wärmespeicher-Zieltemperatur als die Wärmespeicher-Zieltemperatur einzustellen, wenn die Außentemperatur gleich oder niedriger als eine eingestellte Untergrenztemperatur ist, und die minimale Wärmespeicher-Zieltemperatur als die Wärmespeicher-Zieltemperatur einzustellen, wenn die Außentemperatur gleich oder höher als eine eingestellte Obergrenztemperatur ist,
wobei die Steuerung (100) geeignet ist, die Wärmespeicher-Zieltemperatur so einzustellen, dass sie umgekehrt proportional zur Außentemperatur ist, wenn die Außentemperatur höher als die eingestellte Untergrenztemperatur und niedriger als die eingestellte Obergrenztemperatur ist.

2. Wärmespeichervorrichtung mit einem Kaskadenkreis nach Anspruch 1, wobei die Steuerung (100) geeignet ist, eine Eingabefrequenz des ersten Wechselrichterkompressors und eine Eingabefrequenz des zweiten Wechselrichterkompressors entsprechend der Wärmespeicher-Zieltemperatur einzustellen.

3. Wärmespeichervorrichtung mit einem Kaskadenkreis nach Anspruch 1 oder 2, wobei die Steuerung (100) geeignet ist, die Wärmespeicher-Zieltemperatur abhängig von der Außentemperatur auf ein eingestelltes Zeitintervall einzustellen.

4. Wärmespeichervorrichtung mit einem Kaskadenkreis nach einem der Ansprüche 1 bis 3, die ferner aufweist:
eine Wärmemittelpumpe (88; 90), die am Wärmemittelweg installiert ist, um das Wärmemittel zu pumpen,
wobei eine Nachtstromzufuhrleitung, durch die Nachtstrom zugeführt wird, mit der Wärmepumpe verbunden ist, und
eine allgemeine Stromzufuhrleitung, durch die allgemeiner Strom zugeführt wird, mit der Wärmemittelpumpe verbunden ist.

5. Wärmespeichervorrichtung mit einem Kaskadenkreis nach einem der Ansprüche 1 bis 4, die ferner aufweist:
einen Wärmeanforderer (8);
einen Umgehungsweg (92), durch den das vom Wärmespeichertank ausgegebene Wärmemittel den Wärmeanforderer umgeht; und
ein Wärmemittelweg-Schaltventil (94), das ermöglicht, dass das vom Wärmespeichertank ausgegebene Wärmemittel zum Wärmeanforderer oder zum Umgehungsweg strömt.

6. Wärmespeichervorrichtung mit einem Kaskadenkreis nach Anspruch 5, wobei das Wärmemittelweg-Schaltventil einen Heiz- und Wärmespeicher-Modus, in dem Wärmemittel zum Wärmeanforderer strömt, und einen Wärmespeichermodus hat, in dem das Wärmemittel zum Umgehungsweg strömt.

7. Wärmespeichervorrichtung mit einem Kaskadenkreis nach einem der Ansprüche 1 bis 6, wobei der erste Wechselrichterkompressor (12), der erste Expansionsmechanismus (16) und der Außenwärmetauscher (18) in einer Außeneinheit installiert sind, und
der Kaskadenwärmetauscher (14), der zweite Wechselrichterkompressor (52), der Wärmespeicher-Wärmetauscher (54) und der zweite Expansionsmechanismus (56) in einer Inneneinheit installiert sind.

8. Steuerverfahren einer Wärmespeichervorrichtung mit einem Kaskadenkreis nach einem der vorstehenden Ansprüche, das aufweist:
Abtasten, durch einen Außentemperatursensor, einer Außentemperatur;
Einstellen einer Wärmespeicher-Zieltemperatur des Wärmespeichertanks; und
Betreiben einer Wärmepumpe entsprechend der eingestellten Wärmespeicher-Zieltemperatur,
**dadurch gekennzeichnet, dass**
beim Einstellen der Wärmespeicher-Zieltemperatur die Wärmespeicher-Zieltemperatur zwischen einer minimalen Wärmespeicher-Zieltemperatur und einer maximalen Wärmespeicher-Zieltemperatur eingestellt wird, und
die maximale Wärmespeicher-Zieltemperatur als die Wärmespeicher-Zieltemperatur eingestellt wird, wenn die Außentemperatur gleich oder niedriger als eine eingestellte Untergrenztemperatur ist, und die minimale Wärmespeicher-Zieltemperatur als die Wärmespeicher-Zieltemperatur eingestellt wird, wenn die Außentemperatur gleich oder höher als eine eingestellte Obergrenztemperatur ist,
wobei beim Einstellen der Wärmespeicher-Zieltemperatur die Wärmespeicher-Zieltemperatur so eingestellt wird, dass sie umgekehrt proportional zur Außentemperatur ist, wenn die Außentemperatur höher als die eingestellte Untergrenztemperatur und niedriger als die eingestellte Obergrenztemperatur ist.

9. Steuerverfahren nach Anspruch 8, wobei das Abtasten der Außentemperatur, das Einstellen der Wärmespeicher-Zieltemperatur und das Betreiben der Wärmepumpe in einem eingestellten Zeitintervall wiederholt werden.

## Revendications

1. Appareil de stockage de chaleur à cycle en cascade, comprenant :
une pompe à chaleur (1) présentant un cycle de refroidissement à faible température (2) dans lequel un premier réfrigérant est mis en circulation jusqu'à un premier compresseur à inverseur (12), un échangeur de chaleur en cascade (14), un premier mécanisme d'expansion (16), et un échangeur de chaleur d'extérieur (18) et le premier réfrigérant évapore un second réfrigérant en passant à travers l'échangeur de chaleur en cascade et un cycle de refroidissement à haute température (4) dans lequel le second réfrigérant est mis en circulation jusqu'à un second compresseur à inverseur (52), un échangeur de chaleur à stockage de chaleur (54), un second mécanisme d'expansion (56), et l'échangeur de chaleur en cascade (14) et le second réfrigérant chauffe un milieu thermique en passant à travers l'échangeur de chaleur à stockage de chaleur (54) ;
un réservoir de stockage de chaleur (6) connecté à l'échangeur de chaleur à stockage de chaleur à travers un trajet de milieu thermique ;
un détecteur de température extérieure (98) détectant une température extérieure ; et
un dispositif de commande (100) adapté pour fixer une température de stockage de chaleur cible du réservoir de stockage de chaleur (6),
**caractérisé en ce que**
le dispositif de commande (100) est adapté pour fixer la température de stockage de chaleur cible entre une température de stockage de chaleur cible minimale et une température de stockage de chaleur cible maximale, et pour fixer la température de stockage de chaleur cible maximale comme la température de stockage de chaleur cible lorsque la température extérieure est inférieure ou égale à une température fixée de limite inférieure et la température de stockage de chaleur cible minimale comme la température de stockage de chaleur cible lorsque la température extérieure est supérieure ou égale à une température fixée de limite supérieure,
dans lequel le dispositif de commande (100) est adapté pour fixer la température de stockage de chaleur cible de sorte qu'elle soit inversement proportionnelle à la température extérieure lorsque la température extérieure est supérieure à la température fixée de limite inférieure et inférieure à la température fixée de limite supérieure.

2. Appareil de stockage de chaleur à cycle en cascade selon la revendication 1, dans lequel le dispositif de commande (100) est adapté pour commander de manière variable une fréquence d'entrée du premier compresseur à inverseur et une fréquence d'entrée du second compresseur à inverseur selon la température de stockage de chaleur cible.

3. Appareil de stockage de chaleur à cycle en cascade selon la revendication 1 ou 2, dans lequel le dispositif de commande (100) est adapté pour fixer la température de stockage de chaleur cible en fonction de la température extérieure à un intervalle de temps fixé.

4. Appareil de stockage de chaleur à cycle en cascade selon l'une quelconque des revendications 1 à 3, comprenant en outre :
une pompe à milieu thermique (88, 90) installée sur le trajet de milieu thermique pour pomper le milieu thermique,
dans lequel une ligne d'alimentation électrique nocturne à travers laquelle de l'énergie nocturne est fournie est connectée à la pompe à chaleur, et
une ligne d'alimentation électrique générale à travers laquelle de l'énergie générale est fournie est connectée à la pompe de milieu thermique.

5. Appareil de stockage de chaleur à cycle en cascade selon l'une quelconque des revendications 1 à 4, comprenant en outre :
un demandeur de chaleur (8) ;
un trajet de dérivation (92) à travers lequel le milieu thermique évacué du réservoir de stockage de chaleur contourne le demandeur de chaleur ; et
une vanne de commutation de trajet de milieu thermique (94) permettant au milieu thermique évacué du réservoir de stockage de chaleur de s'écouler jusqu'au demandeur de chaleur ou au trajet de dérivation.

6. Appareil de stockage de chaleur à cycle en cascade selon la revendication 5, dans lequel la vanne de commutation de trajet de milieu thermique présente un mode de chauffage et de stockage de chaleur dans lequel le milieu thermique s'écoule jusqu'au demandeur de chaleur et un mode de stockage de chaleur dans lequel le milieu thermique s'écoule jusqu'au trajet de dérivation.

7. Appareil de stockage de chaleur à cycle en cascade selon l'une quelconque des revendications 1 à 6, dans lequel le premier compresseur à inverseur (12), le premier mécanisme d'expansion (16), et l'échangeur de chaleur d'extérieur (18) sont installés dans une unité d'extérieur, et
l'échangeur de chaleur en cascade (14), le second compresseur à inverseur (52), l'échangeur de chaleur à stockage de chaleur (54), et le second mécanisme d'expansion (56) sont installés dans une unité d'intérieur.

8. Procédé de commande d'un appareil de stockage de chaleur à cycle en cascade selon l'une quelconque des revendications précédentes, comprenant :
la détection, par un détecteur de température extérieure, d'une température extérieure ;
la fixation d'une température de stockage de chaleur cible du réservoir de stockage de chaleur ; et
l'entraînement d'une pompe à chaleur selon la température de stockage de chaleur cible fixée,
**caractérisé en ce que**
dans la fixation de la température de stockage de chaleur cible, la température de stockage de chaleur cible est fixée entre une température de stockage de chaleur cible minimale et une température de stockage de chaleur cible maximale, et
la température de stockage de chaleur cible maximale est fixée comme la température de stockage de chaleur cible lorsque la température extérieure est inférieure ou égale à une température fixée de limite inférieure et la température de stockage de chaleur cible minimale est fixée comme la température de stockage de chaleur cible lorsque la température extérieure est supérieure ou égale à une température fixée de limite supérieure,
dans lequel dans la fixation de la température de stockage de chaleur cible, la température de stockage de chaleur cible est fixée de sorte qu'elle soit inversement proportionnelle à la température extérieure lorsque la température extérieure est supérieure à la température fixée de limite inférieure et inférieure à la température fixée de limite supérieure.

9. Procédé de commande selon la revendication 8, dans lequel la détection de la température extérieure, la fixation de la température de stockage de chaleur cible, et l'entraînement de la pompe à chaleur sont répétés à un intervalle de temps fixé.
